# EUROPÄISCHE PATENTSCHRIFT

(11) **EP 0 648 662 B1**
(45) Veröffentlichungstag und Bekanntmachung des Hinweises auf die Patenterteilung: **16.04.1997**
(21) Anmeldenummer: 94112611.2
(22) Anmeldetag: 12.08.1994
(51) Int. Cl.: B62D 25/04, B60J 5/04

(54) **Scharniersäule und Verfahren zur Herstellung einer Scharniersäulenverbindung**
Pillar hinge and procedure for assembling hinge and pillar
Colonne à charnière et méthode d'assemblage de charnière et colonne

(30) Priorität: 15.10.1993 DE 4335163
(43) Veröffentlichungstag der Anmeldung: 19.04.1995
(73) Patentinhaber: VAW Aluminium AG, D-53117 Bonn (DE)
(72) Erfinder: Bungarten, Dieter, Dipl.-Ing., D-53577 Neustadt (DE); Gomon, Volker, Dipl.-Ing., D-70565 Stuttgart (DE); Ebert, Jörg, Dr., D-50858 Köln (DE)
(74) Vertreter: Müller-Wolff, Thomas, Dipl.-Ing.

(56) Entgegenhaltungen:
- EP-A- 0 267 152
- WO-A-92/11156
- DE-A- 4 034 599

## Beschreibung

Die Erfindung betrifft eine Scharniersäule bestehend aus einem Strangpreßprofil, das mit einer A-Säule und ggfs. mit einem vorderen Knotenteil sowie einem Türschweller verbunden ist sowie ein Verfahren zur Herstellung einer Scharniersäulenverbindung.

Eine Fahrzeugkarosserie, deren tragende Struktur zumindest teilweise aus Leichtmetall-Strangpreß-Hohlprofilen gebildet ist, ist aus der DE-OS 40 14 385 (Audi AG) bekannt. Das dort angesprochene Problem der Befestigung von Funktionsteilen am Karosserierahmen ist noch nicht befriedigend gelöst. Es wird nämlich vorgeschlagen, an den Stellen, an denen Querschnittsveränderungen im Profil erforderlich sind, Ausschnitte vorzusehen, die mit einem Leichtmetallgußteil entsprechender Formgebung verschweißt werden.

Damit lassen sich zwar die erforderlichen Funktionsträger an bestimmten Stellen des Strangpreßprofils anordnen, sie sind jedoch unverrückbar fixiert und verursachen einen erheblichen Aufwand für die Feinjustierung.

So ist beispielsweise der Toleranzausgleich zwischen Karosserie und Tür über die Einstellung des Türspaltes nur mittels manueller Krafteinwirkung durch den Monteur möglich. Diese Vorgehensweise erfordert hohe Geschicklichkeit, große Körperkräfte und ist wegen ihrer individuellen Handhabung nicht reproduzierbar. Sie kann ferner nur bei geöffneter Tür durchgeführt werden, so daß ein hohes Risiko der Beschädigung mit entsprechendem Nachbesserungsaufwand besteht.

Aus der DE-P 37 26 292 (Audi AG) ist daher ein Verfahren zur Montage von Fahrzeugtüren mit einem die tragende Struktur bildenden Türkörper bekannt, wobei zum paßgenauen Einsetzen eine komplizierte meßtechnische Erfassung mit definierten Meßpunkten im Türpfosten, im Dachrahmen und ggfs. weiteren Karosserieteilen durchgeführt wird. Die Montage des Türkörpers erfolgt in mehreren Stufen mit einer zeitweiligen Demontage zur Komplettierung der Fahrzeugtür bzw. für weitere Einbauten in der Türöffnung.

Die in der DE 37 26 292 vorgeschlagene Verfahrensweise leistet zwar einen Beitrag zur Fortführung der Automatisierung, der jedoch von der falschen Voraussetzung ausgeht, daß sich grundsätzlich Türen nicht gleichzeitig mit dem Einsetzen auch positionsgenau anbringen lassen.

Aufgabe der vorliegenden Erfindung ist es daher, eine Scharniersäule und ein Verfahren zur Herstellung einer Scharnierverbindung zu entwickeln, die das Einsetzen und das gleichzeitige Positionieren der Fahrzeugtüren gestatten, wobei die optimale Position gegenüber den übrigen Fahrzeugteilen und das exakte Zusammenwirken der Bauteile, wie z.B. Türschlösser, gewährleistet ist, ohne daß eine Zwischenmontage bzw. ausgelagerte Türmontage notwendig ist. Die optimale Positionierung ist dadurch gekennzeichnet, daß gleiche umlaufende Spalte, bündige Außenflächen und Dichtheit gegenüber den übrigen Fahrzeugkarosserieteilen sowie die Schließfunktionen gegeben sind.

Diese Aufgabe wird erfindungsgemäß durch Kombination der im Anspruch 1 genannten Merkmale gelöst. Es hat sich gezeigt, daß mit Hilfe des erfindungsgemäßen Scharnier-Verbindungssystems die Einstellbarkeit der Tür mit Hilfe eines speziellen Profils in der X-Y-Z-Ebene und in der F_{y}-Rotationsachse bzw. X-Z-Ebene gegeben ist. Diese Einstellbarkeit ist sogar bei geschlossener Tür gegeben, so daß das bisherige Ausprobieren entfällt. Auch die automatische Türzwischenmontage ist nicht erforderlich, da die genaue Position der Tür mit wenigen Handgriffen eingestellt werden kann.

Ein erster Schritt für die neue Einstellmöglichkeit der Tür besteht darin, daß zumindest die Außenschale der Tür ein Strangpreßprofil mit einer in Fahrtrichtung (Fahrzeug-X-Richtung) verlaufenden C-Nut aufweist. In diese C-Nut wird als Nutstein ein Verankerungsteil des Türscharniers eingeschoben und kann somit in Fahrzeuglängsrichtung einstellbar verschoben werden.

Der zweite Schritt der Erfindung besteht darin, daß das Verankerungsteil innerhalb eines besonders ausgebildeten Scharnierprofils integriert ist, das an der Scharniersäule entlang in einer hinterschnittenen Nut verschieblich angeordnet ist.

Eine weitere Möglichkeit zur Positionierung des Scharnierteiles ergibt sich durch die Langlöcher, die im Klauenteil des Scharnieres angeordnet sind. Zusammen betrachtet ergeben sich somit Drehmöglichkeiten um folgende Achsen:
1. Fahrzeuglängsrichtung bzw. X-Achse - Bewegung des Nutensteins in der Türaußenschale,
2. F_{y}-Achse - unterschiedliche Bewegung des oberen und unteren Nutensteines in der Tür,
3. Y-Achse - Bewegung des Scharniers entlang den Langlöchern,
4. Z-Achse - Verschiebung des Nutensteines in der hinterschnittenen Nut der Scharniersäule.

In einer bevorzugten Ausgestaltung der Erfindung ist eine Rändelung auf der Auflagefläche der Scharniersäule vorgesehen. Zur Montageerleichterung kann die Sollposition in Y-Richtung auf dem Scharnier gekennzeichnet sein.

Im folgenden wird die Erfindung anhand eines Ausführungsbeispieles näher beschrieben. Es zeigen:
- Figur 1: Querschnitt durch das erfindungsgemäße Scharnierprofil,
- Figur 2: perspektivische Ansicht des erfindungsgemäßen Scharnierteils,
- Figur 3: Querschnitt durch eine aus Strangpreßprofilen gebildete Türaußenschale,
- Figur 4: perspektivische Ansicht einer Scharniersäule mit Scharnierteil und Türausschnitt.

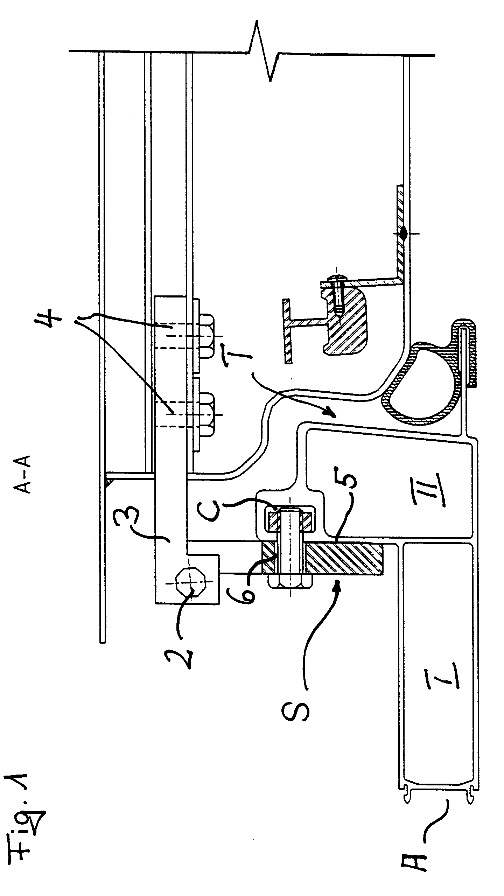

In Figur 1 ist das erfindungsgemäße Scharniersäulenprofil im Querschnitt dargestellt, wobei die Anschlußseite A für die A-Säule und die C-Nut C mit der Anschlußseite S für ein Scharnierteil zu erkennen ist.

Die Grundstruktur des aus zwei Kammern I und II gebildeten Strangpreßprofils ist im Querschnitt gesehen L-förmig, mit einem langen L-Schenkel für die Anbindung des A-Säulenteils oder des Knotenteils an die Karosseriestruktur. In Verlängerung des kurzen Schenkels ist eine C-Nut angeordnet, wobei in dem zwischen den Kammern I und II eingeschlossenen Winkel das Scharnierteil S positioniert ist.

Die Kammer II ist nicht rechtwinklig, rechteckförmig oder quadratisch sondern mit der Begrenzungsfläche T, die zum Türrahmen hin weist, unsymmetrisch ausgebildet. Dabei springt beim Umlaufen des Profilumfanges der Kammer II die Begrenzungsfläche T von innen nach außen aus Sicherheitsgründen vor. Dies soll im Crash-Fall beim seitlichen Aufprall ein Aufspringen der Tür verhindern.

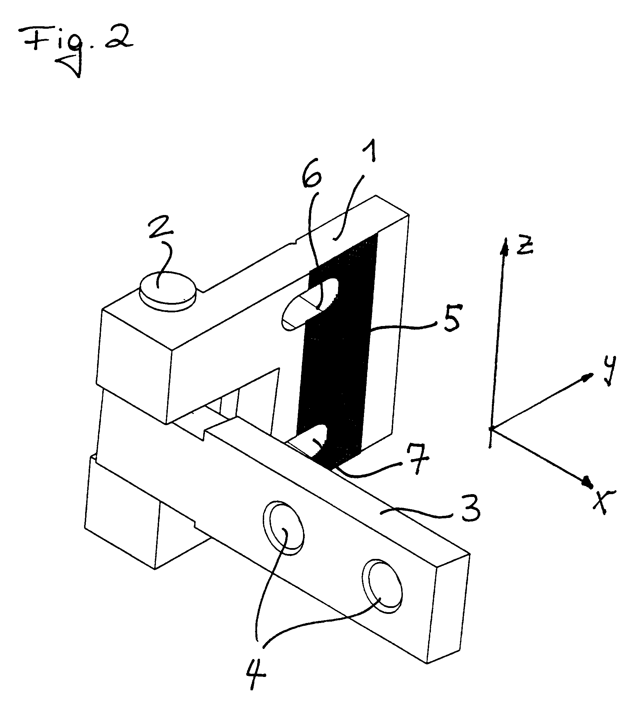

Das in Figur 2 dargestellte Scharnierteil besteht aus einem Klauenteil 1, in dem die Scharnierachse 2 gelagert ist und aus einem Verankerungsteil 3, das drehbar zwischen den Klauen von der Scharnierachse 2 gehalten wird.

In den mit Position 4 bezeichneten Bohrungen oder Gewindebohrungen können Spann- oder Klemmschrauben aufgenommen werden, die zur Festlegung des Verankerungsteils in einer später erläuterten C-Nut dienen.

Aus Figur 2 ist ferner die Anbringung einer geriffelten Kontaktfläche 5 erkennbar, die zur C-Nut C der Scharniersäule hinweist und mit zwei im Abstand voneinander angeordneten Langlöchern 6, 7 ausgestattet ist. Die Langlöcher 6, 7 sind vorzugsweise in Fortsetzung der Klauenteile des Scharnierteils 1 auf der Kontaktfläche 5 angeordnet. Sie ermöglichen eine Verschiebung des Scharnierteils 1 in der Y-Achse sowie durch Drehung auch um die Fₓ-Achse des Fahrzeugs.

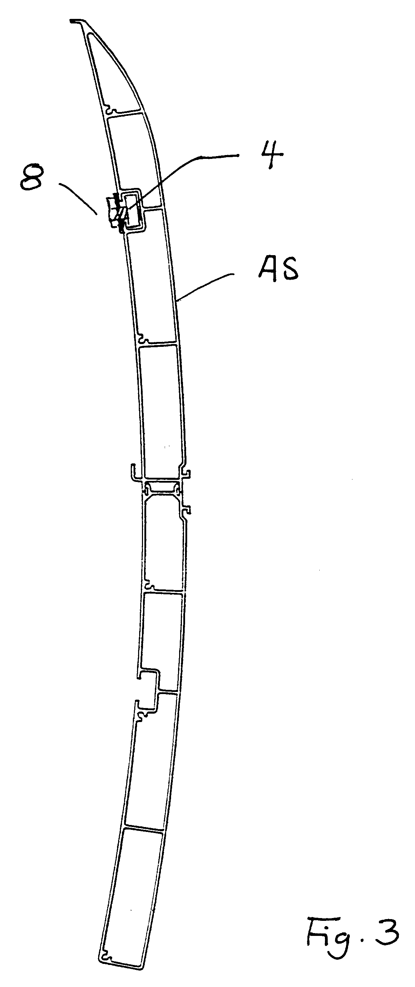

Die in Figur 3 gezeigte Außenschale AS der Fahrzeugtür besteht aus mehreren miteinander gefügten Strangpreßprofilen, die eine zur Innenseite hin geöffnete C-Nut aufweisen, in die ein Verankerungsteil 3 einschiebbar und festlegbar angeordnet ist. Zur Verdeutlichung der Festlegungsmöglichkeiten ist eine Klemmschraube 8 im oberen Teil der Außenschale AS eingezeichnet. Man erkennt, daß sich mit Hilfe dieser Klemmvorrichtung eine leichte Positionierung des Scharnierteils in der X-Achse vornehmen läßt.

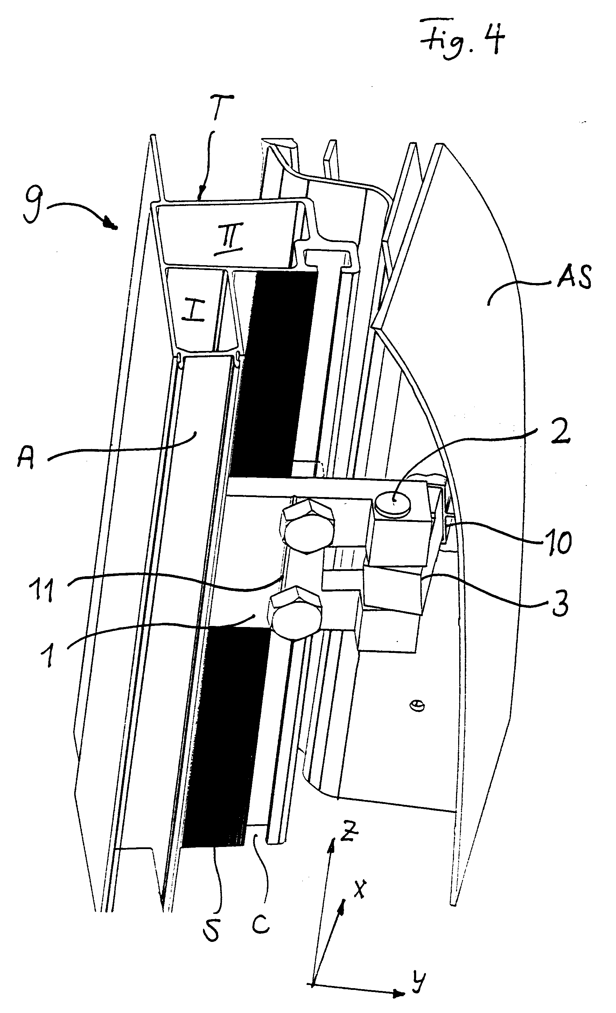

Der Ausschnitt nach Figur 4 zeigt eine Gesamtansicht der erfindungsgemäß zusammenwirkenden Teile. Diese bestehen aus der Scharniersäule 9 mit der Anschlußfläche A zur A-Säule und der zur Türinnenseite hingewandten Türanschlußfläche T. Im hier dargestellten Auführungsbeispiel besteht das Scharniersäulenprofil aus einem Zweikammerprofil I und II, wobei in Verlängerung der Kammer II eine zur Scharnierseite hin geöffnete C-Nut C angeordnet ist.

Unmittelbar der C-Nut C benachbart ist die Scharnierfläche S, die im Innenwinkel zwischen den L-fömigen Schenkeln angeordnet ist und, wie aus Figur 1 und 2 hervorgeht, vorzugsweise mit einer Riffelung versehen ist (hier nicht dargestellt).

Über der Öffnungseite der C-Nut liegt das Scharnierteil 1 mit seinen Langlöchern 6, 7 und seinem Klauenteil, das die Scharnierachse 2 aufnimmt.

Das Scharnierteil 1 ist über die Langlöcher 6, 7 in der Y-Richtung genau positionierbar, wobei als Hilfsmittel die geriffelte Fläche 5 im Sinne eines Einstellrasters wirkt. In der Z-Richtung kann das Scharnierteil 1 durch Verschieben in der C-Nut positioniert werden.

Um die Scharnierachse 2 ist das Verankerungsteil 3 drehbar angeordnet, das mit seiner Verlängerung in die C-Nut 10 des Türaußenprofils AS eingreift. Durch Verschiebung des Verankerungsteils 3 in der C-Nut 10 kann die Tür AS in X-Richtung eingestellt werden.

Als Montageerleichterung für das Scharnierteil 1 in der C-Nut der Scharniersäule ist eine Markierung 11 in Höhe der Langlöcher 6, 7 angebracht. Sie dient als Kennzeichnung für die Sollposition Y, deren Achsrichtung symbolisch auch in Figur 2 auf dem Scharnierteil dargestellt ist. Man erkennt hieraus, daß sich mit dem erfindungsgemäßen Scharniersäulenverbindungsverfahren eine optimale Positionierung der Türaußenschale bei eingebauter Tür vornehmen läßt. Die Positionierung ist auch korrigierbar, falls sich aufgrund von Veränderungen während der Montage oder im Crash-Fall neue Einbausituationen ergeben.

## Patentansprüche

1. Scharniersäule für Kraftfahrzeuge, bestehend aus einem Strangpreßprofil, das mit einer A-Säule und ggf. mit einem vorderen Knotenteil sowie einem Türschweller verbunden ist,
dadurch gekennzeichnet,
daß die Scharniersäule (S) einen L-förmigen Querschnitt mit Kammern I, II aufweist, die einen Winkel zwischen den Kammern I, II des L-Querschnittes einschließen, wobei in dem Winkel das Scharnierteil positioniert ist,
daß der lange L-Schenkel mit der Kammer I eine Anschlußfläche A zur A-Säule hin aufweist und der kurze L-Schenkel mit der Kammer II eine Begrenzungsfläche T zur B-Säule hin aufweist,
daß die Begrenzungsfläche T beim Umlaufen der Kammer II von innen nach außen vorspringt und
daß eine C-förmige Nut mit ihrer Öffnung zum eingeschlossenen Winkel des L-Querschnittes vorspringt.

2. Scharniersäule nach Anspruch 1,
dadurch gekennzeichnet,
daß an der C-Nut mindestens ein Scharnierteil befestigt ist, bestehend aus einem Klauenteil (1), in dem die Scharnierachse (2) gelagert ist und einem an der Scharnierachse (2) zwischen den Klauen drehbaren Verankerungsteil (3), das in einer am Türprofil angeordneten Längsnut (10) einschiebbar ist.

3. Scharniersäule nach einem der vorhergehenden Ansprüche,
dadurch gekennzeichnet,
daß das Klauenteil (1) über die C-Nut hinaus verlängert ist und die Oberfläche des kurzen L-Schenkels übergreift.

4. Scharniersäule nach einem der vorhergehenden Ansprüche,
dadurch gekennzeichnet,
daß Kontaktflächen (5) zwischen der Verlängerung des Klauenteils und der Oberfläche des kurzen L-Schenkels aufgerauht sind.

5. Scharniersäule nach einem der vorhergehenden Ansprüche,
dadurch gekennzeichnet,
daß im Klauenteil (1) Langlöcher (6, 7) zur Befestigung an der C-Nut angeordnet sind, wobei die Längsachse der Langlöcher quer zur Längsachse der C-Nut verläuft.

6. Scharniersäule nach einem der vorhergehenden Ansprüche,
dadurch gekennzeichnet,
daß der Verankerungsteil (3) des Scharniers in der Längsnut (10) des Türprofils verspannt oder verklemmt ist.

7. Verfahren zur Herstellung einer Scharniersäule unter Verwendung eines Strangpreßprofiles, das mit einer A-Säule und ggf. mit einem vorderen Knotenteil sowie einem Türschweller verbunden ist,
dadurch gekennzeichnet,
daß das Verankerungsteil (3 ) des Scharniers in der Längsnut (10) des Türprofils eingeschoben und verklemmt wird,
daß das Klauenteil (1) des Scharniers über die C-Nut geschoben und dort positioniert wird, wobei eine Feinjustierung in Abhängigkeit von der Türspaltbreite durch Verschieben des Klauenteils auf der kurzen L-Schenkelfläche erfolgt.

## Claims

1. A hinge pin for motor vehicles, consisting of an extruded profile which is connected to an A-pin and optionally to a front nodular part and a door sill,
characterised in
that the hinge pin (S) comprises a L-shaped cross-section with chambers I, II which enclose an angle between the chambers I, II of the L-shaped cross-section, with the hinge part being positioned in the angle;
that the long L leg with the chamber I comprises a connecting face A towards the A-pin and that the short L leg with the chamber II comprises a delimiting face T towards the B-pin;
that while extending around the chamber II, the delimiting face projects from the inside to the outside; and
that a C-shaped groove, by means of its opening, projects towards the enclosed angle of the L-shaped cross-section.

2. A hinge pin according to claim 1,
characterised in
that at least one hinge part is fixed to the C-groove, said hinge part consisting of a claw part (1) supporting the hinge axis (2) and of an anchoring part (3) which is rotatable at the hinge axis (2) between the claws and which is slidable into a longitudinal groove (10) provided at the door profile.

3. A hinge pin according to any one of the preceding claims,
characterised in
that the claw part (1) stretches beyond the C-groove and extends over the surface of the short L leg.

4. A hinge pin according to any one of the preceding claims,
characterised in
that the contact faces (5) between the extension of the claw part and the surface of the short L leg are roughened.

5. A hinge pin according to any one of the preceding claims,
characterised in
that the claw part (1) is provided with oblong holes (6, 7) to permit it to be fixed to the C-groove, with the longitudinal axis of the oblong holes extending transversely to the longitudinal axis of the C-groove.

6. A hinge pin according to any one of the preceding claims,
characterised in
that the anchoring part (3) of the hinge is tensioned in or clamped into the longitudinal groove (10) of the door profile.

7. A method of producing a hinge pin using an extruded profile which is connected to an A-pin and optionally to a front nodular part and a door sill,
characterised in
that the anchoring part (3) of the hinge is inserted and clamped into the longitudinal groove (10) of the door profile;
that the claw part (1) of the hinge is slid over the C-groove and positioned therein, with precision adjustment taking place as a function of the door gap width by displacing the claw part on the surface of the short L leg.

## Revendications

1. Colonne de charnière pour véhicule automobile, constituée d'un profilé d'extrusion, reliée à une colonne A et, le cas échéant, à une partie de noeud avant ainsi qu'à un seuil de porte,
caractérisé en ce que
la colonne de charnière (S) présente une section transversale en forme de L avec des chambres I, II, comportant un angle entre les chambre I, II de la section transversale en L, la partie charnière étant positionnée dans l'angle,
en ce que la branche longue du L comportant la chambre I présente une surface de raccordement A vis-à-vis de la colonne A et la branche courte du L ayant la chambre II présente une surface de délimitation T vis-à-vis de la colonne B,
en ce que la surface de délimitation T fait saillie depuis l'intérieur vers l'extérieur lors du contournement de la chambre II, et
en ce qu'une gorge en forme de C fait saillie avec son ouverture vis-à-vis de l'angle inclus de la section transversale en L.

2. Colonne de charnière selon la revendication 1, caractérisé en ce que sur la gorge en C est fixée au moins une partie charnière, constituée d'une partie à griffes (1) dans laquelle tourillonne l'axe de charnière (2) et d'une partie d'ancrage (3) susceptible de tourner sur l'axe de charnière (2) entre les griffes et pouvant être emboîtée dans une rainure longitudinale (10) disposée sur le profil de porte.

3. Colonne de charnière selon l'une des revendications précédentes, caractérisé en ce que la partie à griffes (1) est prolongée sur la gorge en C et recouvre la surface de la branche courte du L.

4. Colonne de charnière selon l'une des revendications précédentes, caractérisé en ce que les surfaces de contact (5) se trouvant entre le prolongement de la partie à griffes et la surface de la branche courte du L sont rendues rugueuses.

5. Colonne de charnière selon l'une des revendications précédentes, caractérisé en ce que des trous oblongs (6, 7) sont ménagés dans la partie à griffes (1) pour assurer la fixation sur la gorge en C, l'axe longitudinal des trous oblongs courant transversalement par rapport à l'axe longitudinal de la gorge en C.

6. Colonne de charnière selon l'une des revendications précédentes, caractérisé en ce que la partie d'ancrage (3) de la charnière est serrée ou coincée dans la gorge longitudinale (10) du profil de porte.

7. Procédé de fabrication d'une colonne de charnière, utilisant un profilé d'extrusion, relié à une colonne A et, le cas échéant, à une partie de noeud avant, ainsi qu'un seuil de porte,
caractérisé en ce que
la partie d'ancrage (3) de la charnière est emboîtée et bloquée par serrage dans la rainure longitudinale (10) du profil de porte,
en ce que la partie à griffes (1) de la charnière est enfilée sur la gorge en C et positionnée à cet endroit, un ajustement fin s'effectuant en fonction de la largeur de l'interstice de porte par un déplacement de la partie à griffes sur la surface de la branche courte du L.
